# FASCICULE DE BREVET EUROPEEN

(11) **EP 1 719 693 B1**
(45) Date de publication et mention de la délivrance du brevet: **02.04.2008**
(21) Numéro de dépôt: 06290658.1
(22) Date de dépôt: 21.04.2006
(51) Int. Cl.: B62K 19/18

(54) **Cadre de cycle**
Fahrradrahmen
Bicycle frame

(30) Priorité: 04.05.2005 FR 0504551
(43) Date de publication de la demande: 08.11.2006
(73) Titulaire: Look Cycle International, 58000 Nevers (FR)
(72) Inventeur: Couturet, Jean-Pierre, 58000 Nevers (FR); Julliard, Eric, 58000 Nevers (FR)
(74) Mandataire: Laget, Jean-Loup

(56) Documents cités:
- WO-A-96/39322
- FR-A- 680 331
- GB-A- 184 246
- US-A- 5 588 662
- US-A- 5 842 711
- US-A- 5 865 456

## Description

La présente invention concerne un cadre de cycle et en particulier la partie arrière de celui-ci qui comporte deux éléments formant haubans reliés à deux éléments formant base, ces éléments étant conçus pour permettre la fixation de la roue arrière sur le cycle. Le document US 5 842 711 montre un cadre de cycle comportant toutes les caractéristiques du préambule de la revendication 1.

Sur les cadres classiques métalliques, les éléments formant haubans et les éléments formant bases sont en général tubulaires et portent à leur intersection respective une patte de fixation de la roue arrière. Chaque patte de fixation est brasée ou collée à l'extrémité de l'élément formant base et comporte un logement d'axe de roue.

Dans le cas d'un cadre en matériau composite, les moyens de liaison entre les extrémités des haubans et des bases sont en général constitués de deux organes de liaison métalliques rapportés. Chaque organe de liaison comporte deux bras dont l'un est inséré dans l'extrémité arrière de l'une des bases et l'autre dans l'extrémité du hauban correspondant. Chaque bras est associé à une collerette qui vient en appui contre l'extrémité de la base respectivement du hauban et l'ensemble bras - collerette est collé sur ces extrémités afin de relier la base au hauban sous un angle aigu défini par l'angle entre les deux bras. Par conséquent, cet angle n'est pas variable pour une adaptation à des tailles différentes de cadre en utilisant un seul et même organe de liaison.

Chaque organe de liaison comporte en outre un logement d'axe de roue arrière sous forme d'une fente ou encoche dirigée vers le bas et apte à recevoir l'une des extrémités d'un axe de roue. Les moyens de fixation de la roue sont constitués par les extrémités filetées de l'axe de roue qui coopèrent avec des écrous de serrage.

L'un des organes de liaison porte en outre une patte de fixation d'un dérailleur.

Dans une variante, les organes de liaison comportent une seule portée pour être collés aux éléments formant bases, alors que les éléments formant haubans sont à leur extrémité inférieure collés sur des embouts séparés. Ces derniers sont ensuite vissés et collés latéralement sur la partie supérieure de chaque organe de liaison.

Même si la conception modulaire de ces cadres permet de réaliser des tailles de cadre différentes en utilisant des éléments communs, elle entraîne néanmoins du poids supplémentaire en raison des organes de liaison rapportés métalliques, des vis etc.

Afin d'alléger les cadres, surtout lorsqu'ils sont en matériaux composites, on a essayé de résoudre ce problème en mettant en oeuvre des parties arrière constituant un ensemble intégrant les éléments formant bases, les éléments formant haubans, ainsi que des pattes pourvues de logements d'axe de roue. Cependant, la fabrication de tels cadres est très complexe et la réparation de ces cadres est devenue extrêmement compliquée, voire impossible.

Le but de l'invention est de remédier aux inconvénients des cadres connus en proposant un cadre dont la partie arrière est allégée, facile à fabriquer et permet la réalisation de cadres de tailles différentes avec le maximum de simplicité.

L'objet de l'invention est un cadre de cycle, comprenant trois noeuds principaux reliés les uns aux autres par des éléments allongés, le cadre comportant à sa partie arrière deux éléments formant des bases s'étendant sensiblement horizontalement vers l'arrière de manière à définir entre elles un espace de réception d'une roue arrière, et deux éléments formant des haubans s'étendant obliquement vers une extrémité respective desdites bases en y étant reliés sous un angle aigu par des moyens de liaison, une paire de logements d'axe de roue arrière étant disposée sensiblement à l'intersection desdits haubans avec lesdites bases, caractérisé par le fait que chaque logement de ladite paire de logements est composé d'une première encoche à fond semi-circulaire effectuée à une extrémité aplatie d'une base et d'une deuxième encoche à fond semi-circulaire effectuée à une extrémité aplatie d'un hauban et disposée en regard de ladite première encoche de sorte que lesdits fonds semi-circulaires soient alignés l'un sur l'autre.

Selon d'autres caractéristiques de l'invention :
- lesdits moyens de liaison comprennent des moyens de fixation de l'axe de roue arrière aptes à serrer ladite extrémité aplatie de chaque élément formant base contre l'extrémité aplatie du hauban correspondant ;
- lesdits moyens de liaison comprennent un moyen d'adhésion appliqué entre ladite extrémité aplatie de chaque base et l'extrémité aplatie du hauban correspondant;
- une surface d'application dudit moyen d'adhésion est délimitée vers l'extérieur par une nervure en arc de cercle sur l'une ou l'autre de ladite extrémité aplatie de chaque base ou du hauban correspondant, ladite nervure étant centrée sur ledit fond semi-circulaire de ladite première ou deuxième encoche ;
- les haubans sont en une seule pièce élastiquement déformable en flexion ;
- lesdits moyens de liaison comprennent en outre un tenon disposé sur l'une ou l'autre de ladite extrémité aplatie de chaque base et du hauban correspondant, ledit tenon étant centré sur le fond semi-circulaire de ladite première ou deuxième encoche et dirigé vers l'autre desdites extrémités afin d'être reçu dans un évidement de forme complémentaire prévu dans cette dernière extrémité et également centré sur le fond semi-circulaire de l'encoche correspondante ;
- le tenon présente une forme cylindrique ;
- le tenon présente une forme conique ;
- au moins une desdites première et deuxième encoches présente une forme évasée vers l'extérieur de manière à permettre l'introduction d'un axe de roue arrière dans lesdits logements après une modification dudit angle aigu ;
- ladite forme évasée permet une modification dudit angle aigu de l'ordre de 20° d'une première position angulaire extrême à une deuxième position angulaire extrême.

D'autres caractéristiques et avantages de l'invention ressortiront de la description qui va suivre d'un mode de réalisation non limitatif de l'invention, en référence aux figures annexées dans lesquelles :
- la figure 1 est une vue d'ensemble d'un cadre selon l'invention ;
- la figure 2 est une vue éclatée en perspective de la partie arrière d'un cadre selon l'invention ;
- la figure 3 est une vue partielle en perspective de l'une des extrémités d'une base selon l'invention ;
- la figure 4 est une vue partielle en perspective de l'une des extrémités d'un hauban selon l'invention ;
- la figure 5 est une vue latérale de la base de la figure 3 et du hauban de la figure 4, après assemblage et dans une première position angulaire extrême l'un par rapport à l'autre;
- la figure 6 est une vue latérale de la base de la figure 3 et du hauban de la figure 4, après assemblage et dans une deuxième position angulaire extrême l'un par rapport à l'autre;
- la figure 7 est une vue en perspective de la partie arrière de cadre de la figure 2, après assemblage.

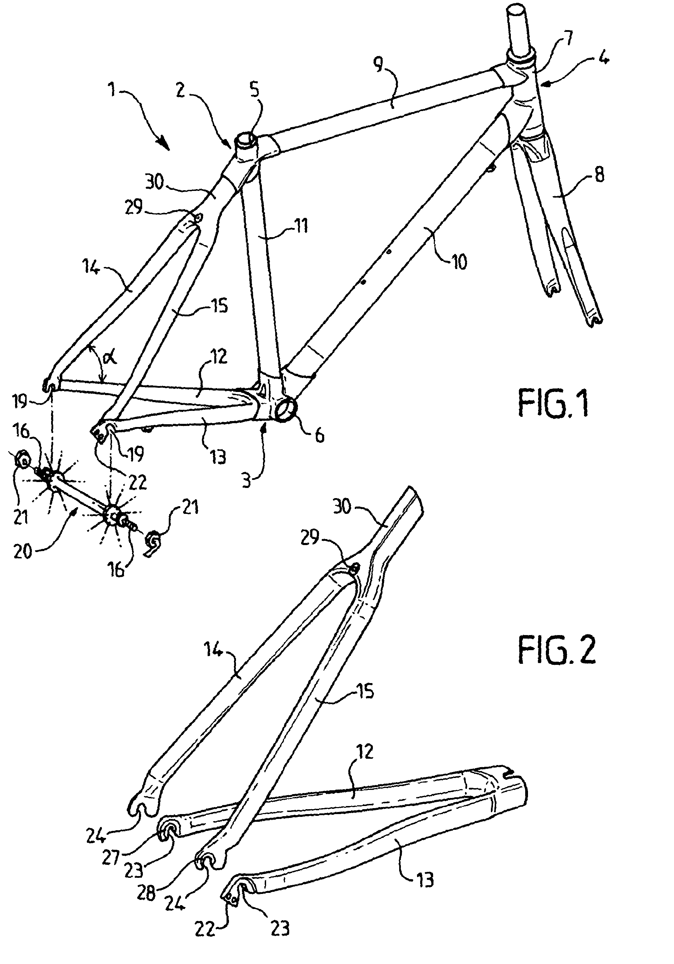

La figure 1 est une vue d'ensemble illustrant un mode de réalisation de l'invention à l'exemple d'un cadre de cycle 1 en matériau composite. Ce cadre comporte trois noeuds 2, 3, 4 comprenant respectivement un raccord de selle 5, un tube de boîtier de pédalier 6 et un tube de direction 7. Ce dernier est apte à recevoir l'extrémité haute d'une fourche 8 portant la roue avant (non représentée) du cycle.

Les trois noeuds 2, 3, 4 sont reliés les uns aux autres par des éléments allongés tubulaires, à savoir un tube supérieur ou horizontal 9 qui relie le raccord de selle 5 au tube de direction 7, un tube diagonal 10 reliant le tube de direction 7 au tube de boîtier de pédalier 6, et un tube de selle 11 reliant le tube de boîtier de direction au raccord de selle 5.

Le cadre comporte à sa partie arrière deux éléments tubulaires formant des bases 12, 13 s'étendant sensiblement horizontalement vers l'arrière de manière à définir entre elles un espace de réception d'une roue arrière (non représentée), et deux éléments tubulaires formant des haubans 14, 15 reliés au noeud 2 et s'étendant obliquement vers une extrémité respective des bases 12, 13. Les haubans 14, 15 sont reliés aux bases 12, 13 sous un angle aigu α à l'aide de moyens de liaison qui seront décrits en détail plus loin.

Les moyens de liaison comprennent une paire de logements 19 d'axe de roue arrière, ces logements étant dirigés vers le bas et aptes à recevoir l'une des extrémités d'un axe de roue 20. Les moyens de fixation de la roue sont constitués par les extrémités filetées 16 de l'axe de roue 20 qui coopèrent avec des écrous de serrage 21.

Une paire de logements 19 d'axe de roue arrière est disposée sensiblement à l'intersection des bases 12, 13 avec les haubans 14, 15.

L'invention se rapporte à la partie arrière du cadre de cycle et sera maintenant décrite plus en détail en référence aux figures 2 à 7 illustrant à plus grande échelle cette partie arrière du cadre.

Selon une caractéristique importante de l'invention, chaque logement 19 de la paire de logements d'axe de roue arrière est composé d'une première encoche à fond semi-circulaire 23 effectuée à une extrémité aplatie d'une base 12, 13 et d'une deuxième encoche à fond semi-circulaire 24 effectuée à une extrémité aplatie d'un hauban 14, 15 et disposée en regard de la première encoche 23 de sorte que les fonds semi-circulaires soient alignés l'un sur l'autre.

Afin d'assurer cet alignement lors de l'assemblage du cadre, on place une tige cylindrique (non représentée) disposée transversalement dans les première et deuxième encoches 23, 24 de sorte que les fonds de celles-ci reposent sur cette tige avant de fixer définitivement les bases 12, 13 et les haubans 14, 15 par rapport au reste du cadre ou les uns par rapport aux autres.

Dans leur forme la plus simple, les moyens de liaison comprennent les moyens de fixation de l'axe de roue 20 illustrés à la figure 1. Dans ce cas, les écrous 21 sont vissés sur les extrémités filetées de l'axe de roue 20 de manière à non seulement assurer la fixation de la roue au cadre, mais aussi à serrer l'extrémité aplatie de chaque base 12, 13 contre l'extrémité aplatie du hauban correspondant 14, 15. Bien entendu, les bases 12, 13 et les haubans 14, 15 ont alors préalablement été fixés aux autres éléments du cadre et donc les uns par rapport aux autres pour que les fonds semi-circulaires des première et deuxième encoches 23, 24 soient alignés afin de présenter une surface d'appui homogène à l'axe de roue 20.

Selon un autre mode de réalisation, les moyens de liaison comprennent un moyen d'adhésion telle qu'une colle appliquée entre l'extrémité aplatie de chaque base 12, 13 et l'extrémité aplatie du hauban correspondant 14, 15.

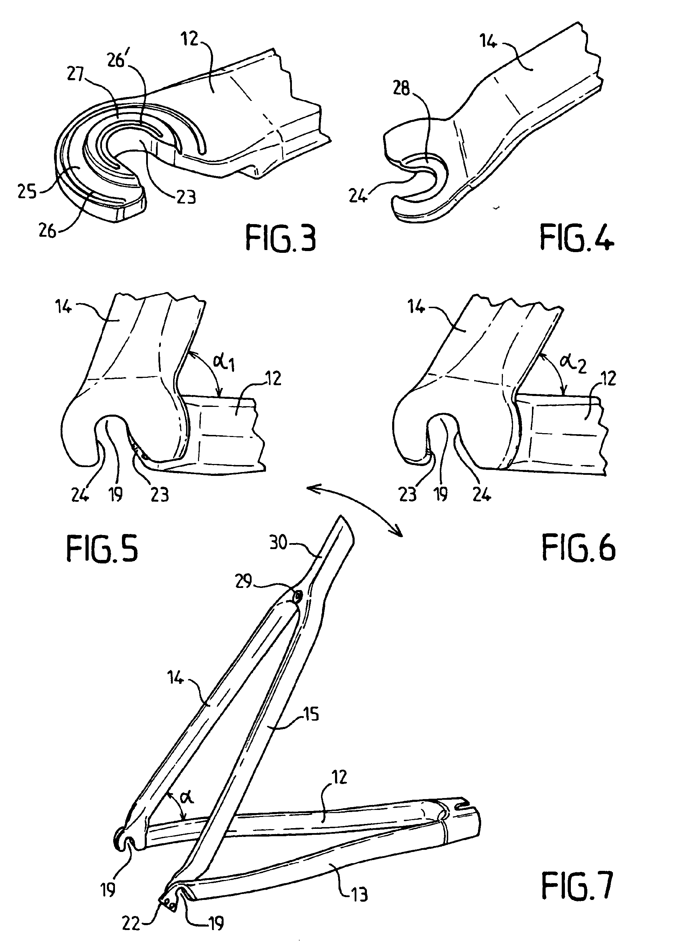

Dans le cas d'utilisation d'une colle, une surface d'application de colle 25 est avantageusement délimitée d'une part vers l'extérieur sur l'extrémité aplatie de la base 12, 13 (voir figure 3), ou sur celle du hauban 14, 15, par une première nervure en arc de cercle 26, et d'autre part vers l'intérieur par une deuxième nervure en arc de cercle 26'. Cette nervure 26 est de préférence centrée sur le fond semi-circulaire de la première encoche 23 dans le cas où elle se trouve sur l'extrémité de la base 12, 13, et dans le cas contraire sur le fond semi-circulaire de la deuxième encoche 24.

Pour améliorer la tenue mécanique de la liaison entre les bases 12, 13 et les haubans 14, 15 face à différents efforts comme le poids du cycliste, la traction de la chaîne notamment, les moyens de liaison peuvent en outre comprendre un tenon 27 disposé sur l'une ou l'autre de l'extrémité la base 12, 13 (voir figure 3) ou du hauban correspondant 14, 15.

Ce tenon 27 présente une forme cylindrique ou conique et il est dans l'exemple illustré à la figure 3 centré sur le fond semi-circulaire de la première encoche 23. Le tenon 27 est dirigé vers l'extrémité de l'autre élément afin d'être reçu dans un évidement 28 de forme complémentaire prévu dans cette dernière extrémité. Cet évidement est également centré sur le fond semi-circulaire de l'encoche correspondante, ici l'encoche 24.

Afin de permettre une modification de l'angle aigu α entre les bases 12, 13 et les haubans 14, 15 en fonction des tailles différentes de cadres fabriqués à partir des mêmes éléments de cadre, la première encoche 23 et/ou la deuxième encoche 24 présente(nt) une forme évasée vers l'extérieur. Ainsi, il est possible de modifier l'angle maximal α1 montré à la figure 5 correspondant à la taille maximale de ce cadre jusqu'à l'angle minimal α2 montré à la figure 6 correspondant à la taille minimale de ce même cadre. La différence entre l'angle maximal α1 et l'angle minimal α2 est de l'ordre de 20° d'une première position angulaire extrême correspondant à l'angle maximal α1 jusqu'à une deuxième position angulaire extrême correspondant à l'angle minimal α2.

Pour la réalisation de cadres de différentes tailles, la longueur des bases 12, 13 est conservée constante, alors que la différenciation des tailles, en ce qui concerne la partie arrière du cadre, se fait uniquement par l'inclinaison variée (l'angle α) des haubans 14, 15 par rapport aux bases 12, 13 et par l'adaptation de la longueur des haubans. Pour la modification de l'angle α, la présence du tenon 27 et de l'évidement 28 est particulièrement avantageuse puisque ces deux éléments forment en effet une liaison pivot.

Les haubans 14, 15 sont avantageusement en une seule pièce comportant un trou de fixation de frein arrière 29 et se terminant dans sa partie haute par un manche 30 relié au noeud de selle 2. Pour adapter la partie arrière à des dimensions différentes de cadre, il suffit de modifier l'inclinaison entre les bases 12, 13 et les haubans 14, 15 et de raccourcir simplement la longueur du manche 30. Il est à noter que la distance entre le centre des fonds semi-circulaires des logements 19 et le trou de fixation 29 reste constante et que la même pièce peut être utilisée sans problème pour des tailles différentes de cadre.

Pour faciliter l'assemblage dans le cas où les haubans 14, 15 sont en une seule pièce pourvue de tenons 27 et d'évidements 28, cette pièce est de préférence élastiquement déformable en flexion pour rapprocher ses deux extrémités et les relâcher lorsque les tenons 27 entrent dans les évidements 28 à la manière d'un encliquetage.

Si les extrémités des bases 12, 13 et des haubans 14, 15 ne sont pas reliées à demeure les unes aux autres par un moyen d'adhésion, on obtient encore un avantage, à savoir qu'après avoir retiré la roue arrière du cadre, il est alors possible d'écarter, côté droit, l'une de l'autre les extrémités de la base 13 et du hauban correspondant 15 créant ainsi un intervalle suffisant pour autoriser le passage de la chaîne (non représentée) sans être obligé de la démonter en ouvrant un maillon de chaîne.

La conception de la partie arrière de cadre selon l'invention est particulièrement bien adaptée à des pièces obtenues par moulage, réalisées par exemple en matériaux composites, même si certains de ces avantages peuvent être conservés pour des cadres utilisant des matériaux et un procédé d'assemblage plus traditionnels.

Dans tous les cas, la conception du cadre selon l'invention est largement simplifiée et permet de réaliser une économie de poids du fait qu'aucun organe spécifique ou supplémentaire n'est plus nécessaire pour assurer la liaison des extrémités des bases et des haubans entre elles : ces éléments étant réduits à leur plus simple expression tout en assurant les mêmes fonctions.

Bien entendu, l'invention n'est pas limitée aux exemples illustrés et décrits, et l'homme du métier pourra envisager des variantes et modifications sans pour autant sortir du domaine de protection de la présente invention. Ainsi, il est bien entendu possible de placer les extrémités des haubans à l'extérieur des extrémités des bases tout en maintenant les caractéristiques essentielles de l'invention.

## Revendications

1. Cadre de cycle, comprenant trois noeuds principaux (2 à 4) reliés les uns aux autres par des éléments allongés (9, 10, 11), le cadre comportant à sa partie arrière deux éléments formant des bases (12, 13) s'étendant sensiblement horizontalement vers l'arrière de manière à définir entre elles un espace de réception d'une roue arrière, et deux éléments formant des haubans (14, 15) s'étendant obliquement vers une extrémité respective desdites bases (12, 13) en y étant reliés sous un angle aigu (α) par des moyens de liaison, une paire de logements (19) d'axe de roue arrière étant disposée sensiblement à l'intersection desdits haubans (14, 15) avec lesdites bases (12, 13), **caractérisé par le fait que** chaque logement (19) de ladite paire de logements est composé d'une première encoche à fond semi-circulaire (23) effectuée à une extrémité aplatie d'une base (12, 13) et d'une deuxième encoche à fond semi-circulaire (24) effectuée à une extrémité aplatie d'un hauban (14, 15) et disposée en regard de ladite première encoche (23) de sorte que lesdits fonds semi-circulaires soient alignés l'un sur l'autre.

2. Cadre de cycle selon la revendication 1, **caractérisé par le fait que** lesdits moyens de liaison comprennent des moyens de fixation (20, 21) de l'axe de roue arrière aptes à serrer ladite extrémité aplatie de chaque base (12, 13) contre l'extrémité aplatie du hauban correspondant (14, 15).

3. Cadre de cycle selon la revendication 1 à 2, **caractérisé par le fait que** lesdits moyens de liaison comprennent un moyen d'adhésion appliqué entre ladite extrémité aplatie de chaque base (12, 13) et l'extrémité aplatie du hauban correspondant (14, 15).

4. Cadre de cycle selon la revendication 3, **caractérisé par le fait qu**'une surface d'application (25) dudit moyen d'adhésion est délimitée vers l'extérieur par une nervure en arc de cercle (26) sur l'une ou l'autre de ladite extrémité aplatie de chaque base (12, 13) ou du hauban correspondant (14, 15), ladite nervure (26) étant centrée sur ledit fond semi-circulaire de ladite première (23) ou deuxième (24) encoche.

5. Cadre de cycle selon l'une quelconque des revendications précédentes, **caractérisé par le fait que** les haubans (14, 15) sont en une seule pièce élastiquement déformable en flexion.

6. Cadre de cycle selon l'une quelconque des revendications précédentes, **caractérisé par le fait que** lesdits moyens de liaison comprennent en outre un tenon (27) disposé sur l'une ou l'autre de ladite extrémité aplatie de chaque base (12, 13) et du hauban correspondant (14, 15), ledit tenon (27) étant centré sur le fond semi-circulaire de ladite première (23) ou deuxième (24) encoche et dirigé vers l'autre desdites extrémités afin d'être reçu dans un évidement (28) de forme complémentaire prévu dans cette dernière extrémité et également centré sur le fond semi-circulaire de l'encoche correspondante.

7. Cadre de cycle selon la revendication 6, **caractérisé par le fait que** le tenon (27) présente une forme cylindrique.

8. Cadre de cycle selon la revendication 6, **caractérisé par le fait que** le tenon (27) présente une forme conique.

9. Cadre de cycle selon l'une quelconque des revendications précédentes, **caractérisé par le fait qu**'au moins une desdites première et deuxième encoches (23, 24) présente une forme évasée vers l'extérieur de manière à permettre l'introduction d'un axe de roue arrière (20) dans lesdits logements après une modification dudit angle aigu (α).

10. Cadre de cycle selon la revendication 9, **caractérisé par le fait que** ladite forme évasée permet une modification dudit angle aigu (α) de l'ordre de 20° d'une première position angulaire extrême à une deuxième position angulaire extrême.

## Claims

1. A bicycle frame, comprising three principal hubs (2 to 4) connected to one other by elongated elements (9, 10, 11), the frame comprising at its rear portion two elements forming bases (12, 13) which extend substantially horizontally to the rear so as to define between them a space for mounting a rear wheel, and two elements forming braces (14, 15) extending obliquely toward one respective end of said bases (12, 13) and being connected thereto at an acute angle (α) by connecting means, a pair of recesses (19) for a rear wheel axle being disposed substantially at the intersection of said braces (14, 15) with said bases (12, 13), **characterized by** the fact that each recess (19) of said pair of recesses comprises a first notch with a semicircular base (23) provided at one flattened end of a base (12, 13) and by a second notch with a semicircular base (24) provided at a flattened end of a brace (14, 15) and arranged facing said first notch (23) such that said semicircular bases are in alignment with each other.

2. The bicycle frame according to claim 1, **characterized by** the fact that said connecting means comprise securing means (20, 21) for the rear wheel axle designed to grip said flattened end of each base (12, 13) against the flattened end of the corresponding brace (14, 15).

3. The bicycle frame according to claim 1 to 2, **characterized by** the fact that said connecting means comprise adhesive means applied between said flattened end of each base (12, 13) and the flattened end of the corresponding brace (14, 15).

4. The bicycle frame according to claim 3, **characterized by** the fact that an application surface (25) of said adhesive means is delimited outwardly by a rib in the arc of a circle (26) on one or other of said flattened ends of each base (12, 13) or of the corresponding brace (14, 15), said rib (26) being centred on said semicircular base of said first (23) or second (24) notch.

5. The bicycle frame according to any one of the preceding claims, **characterized by** the fact that the braces (14, 15) consist of one piece which is resiliently deformable in flexure.

6. The bicycle frame according to any one of the preceding claims, **characterized by** the fact that said connecting means also comprise a tenon (27) arranged on one or other of the said flattened ends of each base (12, 13) and of the corresponding brace (14, 15), said tenon (27) being centred on the semicircular base of said first (23) or second (24) notch and directed towards the other of said ends so as to be received in a recess (28) with a complementary shape provided in this latter end and also centred on the semicircular base of the corresponding notch.

7. The bicycle frame according to claim 6, **characterized by** the fact that the tenon (27) has a cylindrical shape.

8. The bicycle frame according to claim 6, **characterized by** the fact that the tenon (27) has a conical shape.

9. The bicycle frame according to any one of the preceding claims, **characterized by** the fact that at least one of said first and second notches (23, 24) has an outwardly flared shape so as to permit the introduction of a rear wheel axle (20) into said recesses after a modification of said acute angle (α).

10. The bicycle frame according to claim 9, **characterized by** the fact that said flared shape permits a modification of said acute angle (α) of in the order of 20° from a first extreme angular position to a second extreme angular position.

## Patentansprüche

1. Fahrradrahmen, welcher drei Hauptknotenpunkte (2 bis 4) umfasst, die miteinander durch längliche Bauteile (9, 10, 11) verbunden sind, wobei der Rahmen in seinem hinteren Bereich zwei Bauteile aufweist, die Basisteile (12, 13) bilden und sich im Wesentlichen dergestalt horizontal nach hinten erstrecken, dass sie zwischen sich einen Zwischenraum zur Aufnahme eines Hinterrades bilden, sowie zwei Bauteile aufweist, die Streben (14, 15) bilden und sich schräg jeweils zu einem Ende dieser Basisteile (12, 13) hin erstrecken, wobei sie mit diesem in einem spitzen Winkel (α) durch Verbindungsmittel verbunden sind, wobei ein Paar Aufnahmen (19) der Hinterradachse im Wesentlichen am Schnittpunkt dieser Streben (14, 15) mit diesen Basisteilen (12, 13) angeordnet ist,
**dadurch gekennzeichnet,**
**dass** jede Aufnahme (19) dieses Paars Aufnahmen von einer ersten Einkerbung mit halbkreisförmigem Boden (23), die an einem abgeflachten Ende eines Basisteils (12, 13) ausgeführt ist, und einer zweiten Einkerbung mit halbkreisförmigem Boden (24), die an einem abgeflachten Ende einer Strebe (14, 15) ausgeführt und so gegenüber der ersten Einkerbung (23) angeordnet ist, dass diese halbkreisförmigen Böden aufeinander ausgerichtet sind, gebildet ist.

2. Fahrradrahmen nach Anspruch 1,
**dadurch gekennzeichnet,**
**dass** diese Verbindungsmittel Befestigungsmittel (20, 21) für die Hinterradachse umfassen, die geeignet sind, das genannte abgeflachte Ende jedes Basisteils (12, 13) an dem abgeflachten Ende der entsprechenden Strebe (14, 15) festzuklemmen.

3. Fahrradrahmen nach Anspruch 1 bis 2,
**dadurch gekennzeichnet,**
**dass** diese Verbindungsmittel ein Haftungsmittel umfassen, das zwischen diesem abgeflachten Ende jedes Basisteils (12, 13) und dem abgeflachten Ende der entsprechenden Strebe (14, 15) angebracht ist.

4. Fahrradrahmen nach Anspruch 3,
**dadurch gekennzeichnet,**
**dass** eine Anbringungsfläche (25) für dieses Haftungsmittel nach außen durch eine kreisbogenförmige Rippe (26) auf dem einen oder dem anderen dieser abgeflachten Enden jedes Basisteils (12, 13) oder der entsprechenden Strebe (14, 15) begrenzt ist, wobei diese Rippe (26) auf dem genannten halbkreisförmigem Boden dieser ersten Einkerbung (23) oder zweiten Einkerbung (24) zentriert ist.

5. Fahrradrahmen nach einem der vorherigen Ansprüche,
**dadurch gekennzeichnet,**
**dass** die Streben (14, 15) in einem Stück elastisch biegbar ausgeführt sind.

6. Fahrradrahmen nach einem der vorherigen Ansprüche,
**dadurch gekennzeichnet,**
**dass** diese Verbindungsmittel ferner einen Vorsprung (27) umfassen, der auf dem einen oder dem anderen dieser abgeflachten Enden jedes Basisteils (12, 13) und der entsprechenden Strebe (14, 15) angeordnet ist, wobei dieser Vorsprung (27) auf dem halbkreisförmigem Boden dieser ersten Einkerbung (23) oder zweiten Einkerbung (24) zentriert und dem andern dieser Enden zugewandt ist, um in einer komplementär geformten Aussparung (28), die in diesem letzteren Ende vorgesehen ist und ebenfalls auf dem halbkreisförmigem Boden der entsprechenden Einkerbung zentriert ist.

7. Fahrradrahmen nach Anspruch 6,
**dadurch gekennzeichnet,**
**dass** der Vorsprung (27) eine zylindrische Form aufweist.

8. Fahrradrahmen nach Anspruch 6,
**dadurch gekennzeichnet,**
**dass** der Vorsprung (27) eine konische Form aufweist.

9. Fahrradrahmen nach einem der vorherigen Ansprüche,
**dadurch gekennzeichnet,**
**dass** mindestens eine der ersten und zweiten Einkerbungen (23, 24) eine sich nach außen erweiternde Form dergestalt aufweist, dass sie nach einer Veränderung des genannten spitzen Winkels (α) das Einsetzen einer Hinterradachse (20) in die genannten Aufnahmen ermöglicht.

10. Fahrradrahmen nach Anspruch 9,
**dadurch gekennzeichnet,**
**dass** diese sich erweiternde Form eine Veränderung des genannten spitzen Winkels (α) in der Größenordnung von 20° von einer ersten Extremwinkelstellung zu einer zweiten Extremwinkelstellung ermöglicht.
